## Europäisches Patentamt

## European Patent Office

(19)

## Office européen des brevets

(11) Veröffentlichungsnummer: **0 037 528**
**B1**

(12)

# EUROPÄISCHE PATENTSCHRIFT

(45) Veröffentlichungstag der Patentschrift:
**12.09.84**

(51) Int. Cl.³: **F 16 L 57/00,** F 16 L 55/10,
B 65 D 39/08, B 65 D 41/04

(21) Anmeldenummer: **81102283.9**

(22) Anmeldetag: **26.03.81**

(54) **Als Gewindestopfen oder Schraubkappe verwendbarer Verschluss für rohrförmige Anschlüsse.**

(30) Priorität: **28.03.80 US 134932**

(43) Veröffentlichungstag der Anmeldung:
**14.10.81 Patentblatt 81/41**

(45) Bekanntmachung des Hinweises auf die Patenterteilung:
**12.09.84 Patentblatt 84/37**

(84) Benannte Vertragsstaaten:
**BE DE FR GB IT**

(56) Entgegenhaltungen:
**AT - B - 358 339
DE - A - 2 152 353
DE - C - 750 207
FR - A - 1 216 506
US - A - 658 313
US - A - 2 486 364
US - A - 3 200 984
US - A - 3 837 522
US - A - 3 948 290**

(73) Patentinhaber: **DEERE & COMPANY, 1 John Deere
Road, Moline Illinois 61265 (US)**

(72) Erfinder: **Underwood, Gerald Timothy, 4802 6th Avenue,
Moline Illinois 61265 (US)**

(74) Vertreter: **Fricke, Joachim, Dr. et al, Dr. R. Döring, Dr. J.
Fricke, Patentanwälte Josephspitalstrasse 7,
D-8000 München 2 (DE)**

## Beschreibung

Die Erfindung betrifft einen Verschluss zum lösbaren Anbringen wahlweise innen als Gewindestopfen oder aussen als Schraubkappe auf das freie Ende von rohrförmigen Anschlüssen mit Innen- und Aussengewinde, z.B. von Rohrstutzen, bestehend aus einem von der einen Stirnseite her kappenförmig und mit Innengewindeabschnitt ausgebildeten und von der anderen Stirnseite her stopfenförmig und mit Aussengewindeabschnitt ausgebildeten Verschlusskörper.

Ein Verschlusskörper dieser Art ist seit langem z.B. aus der US-A-658 313 bekannt. Der Verschlusskörper besteht aus einem geeigneten Metall und ist über die Länge seines stopfenseitigen Endes im wesentlichen massiv ausgebildet, während das sich daran axial anschliessende kappenförmige Ende aussen glatt zylindrisch ausgebildet ist.

Es sind auch stöpselartige Verschlüsse aus flexiblem Material bekannt, die dazu dienen, rohrförmige Anschlüsse während des Transportes oder während der Lagerhalterung gegen das Eindringen von Verunreinigungen oder Feuchtigkeit abzudichten (vgl. US-A-3200 984). Der Stopfen ist hohlzylindrisch ausgebildet und weist ein offenes und ein in axialer Richtung schwach konisch vorspringendes geschlossenes Ende auf. Unmittelbar anschliessend an das geschlossene Stirnende sind am Aussenumfang des Stopfens mehrere sich abwechselnde Umfangsrippen und Umfangsnuten vorgesehen, welche eine Verformung der Verschlusskappe beim Einpressen der Kappe in das offene Rohrende erleichtern sollen, wobei unter dem Einführungsdruck auch das geschlossene Ende eine stärkere Konizität annimmt. Durch diese Verformung der Verschlusskappe soll ein hermetisch abdichtender Kontakt zwischen Aussenumfang des Verschlusskörpers und Innenumfang des Rohrendes oder dgl. erreicht werden. Das offene Ende des Verschlusses ragt nach eingesetztem Verschluss über das Rohrende hinaus und ist nach aussen offen.

Für den Verschluss von Schlauchenden aus elastomerem Material ist ein stöpselartiger Verschluss ebenfalls aus elastomerem Material bekannt, der einen zylindrischen Abschnitt aufweist, der über einen Teil seiner Länge aus vollem Material besteht und in das Innere des Schlauches geschoben wird, während ein axial vorspringender hohlzylindrischer Teil des Stöpsels nach aussen um das umgefaltete Schlauchende zurückgeschlagen wird, um so den Stöpsel mechanisch in der eingesetzten Stellung zu halten und das Schlauchende abzudichten (vgl. US-A-3948 290).

Ferner ist es bei Flaschenverschlüssen bekannt, einen Verschlussteil aus Kunststoffmaterial vorzusehen, der an einem Ende einen hohlzylindrischen geschlossenen Stopfen aufweist, der in das Innere des Flaschenhalses gedrückt wird und eine umfängliche Dichtungsrippe aufweist, die mit dem Inneren des Flaschenhalses abdichtend zusammenwirkt. Anschliessend an den stopfenförmigen Teil erweitert sich der Verschlusskörper, wobei dieser sich erweiternde Teil nach Einsetzen des Stopfens über die ringförmige Stirnfläche des Flaschenhalses bis auf die Aussenseite des Halsmundstückes umgeschlagen wird. Ein verdickter Randwulst ist mit dem sich erweiternden Teil über eine Reisslinie verbunden. Der Randwulst greift unter einen Aussenwulst des Flaschenhalses um den Verschluss in seiner Schliesslage zu halten. Zum Öffnen wird dieser Randwulst von dem übrigen Teil des Verschlusses abgerissen, worauf der stöpselförmige Teil aus dem Flaschenhals gezogen werden kann (vgl. FR-A-1216 506).

Ausgehend von einem Verschluss mit den Merkmalen der US-A-658 313 ist es Aufgabe der Erfindung diesen Verschluss so weiterzubilden, dass der Vorteil eines Gewindeeingriffes des bekannten Verschlusses beibehalten werden kann, der Verschluss aber bei erleichterter Handhabungsmöglichkeit wesentlich kleiner und leichter ausgebildet werden kann, wodurch der Anreiz, einen solchen Verschluss wirklich auch einzusetzen, wesentlich erhöht wird.

Diese Aufgabe wird erfindungsgemäss dadurch gelöst, dass der Verschlusskörper aus einem flexiblen Material besteht, dass der Aussengewindeabschnitt auf der Aussenseite des mit Innengewinde versehenen hohlzylindrischen Abschnittes des Verschlusskörpers vorgesehen ist und dass ein Griffabschnitt in Form einer sich axial von der kappenförmigen Stirnseite weg erstreckenden und in Richtung auf die stopfenförmige Stirnseite über den Verschlusskörper bzw. ein vorspringendes Teil des zu verschliessenden Anschlusses zurückrollbaren Hülse von gegenüber der Verschlusskappe verringerter Wanddikke vorgesehen ist, die über einen sich radial nach aussen erstreckenden Kragen mit der kappenförmigen Stirnseite des Verschlusskörpers verbunden ist.

Durch den Gewindeeingriff wird eine wesentlich sicherere Halterung des Verschlusses an dem rohrförmigen Anschluss oder dgl. erreicht im Vergleich zu Verschlüssen, die nur mit mehr oder weniger starker Reibung an dem rohrförmigen Anschluss angreifen. Dadurch dass der mit Gewinde versehene Verschluss dennoch aus flexiblem Material hergestellt ist, wird gleichzeitig mit dem Gewindeeingriff auch eine wesentlich bessere Abdichtung zwischen dem Verschluss und dem rohrförmigen Anschluss erreicht, im Vergleich zu aus Metall bestehenden Verschlüssen der gattungsgemässen Art. Die für die Verwendungsmöglichkeit als Stopfen oder als Kappe notwendigen Aussengewindeabschnitte bzw. Innengewindeabschnitte sind an den gleichen hohlzylindrischen Abschnitten des Verschlusskörpers vorgesehen, überlappen sich also in radialer Richtung gesehen, was eine wesentlich gedrungenere Bauart ermöglicht. Dies gestattet es auch bei begrenzter axialer Länge des Verschlusses Gewindeabschnitte für unterschiedliche Durchmesser sowohl stopfenseitig als auch kappenseitig vorzusehen. Die Handhabung des Stopfens wird wesentlich erleichtert durch die über den Verschlusskörper zurückrollbare Hülse, die vom kappenseitigen Ende des Verschlusskörpers sowohl in radialer Richtung als auch in axialer Richtung vorspringt. Bei Verwendung des Verschlusses als Verschlussstopfen bleibt zunächst diese Hülse in axialer Erstreckung und dient als Handhabe und wird nach Einschrauben des Verschlusses über das freie Ende des rohrförmigen Anschlusses zurückgefaltet. Bei Verwendung als Verschlusskappe kann die Hülse zunächst über den Verschlusskörper zurückgefaltet werden, wodurch das Erfassen und die Handhabung des Verschlusses trotz der aussenliegenden Gewindeabschnitte wesentlich erleichtert werden.

Ein besonderer Vorteil des Verschlusses liegt darin, dass er bei gedrungener Bauart für Rohre unterschiedlichen Durchmessers gleichermassen eingesetzt werden kann, wenn der Durchmesser der aus Verschlusskörper und Griffabschnitt bestehenden Einheit von dem stopfenförmigen Ende her stufenweise zunehmend ausgebildet ist und der Verschlusskörper wenigstens zwei gegeneinander abgestufte Abschnitte jeweils mit Innen- und Aussengewinde aufweist. Durch die Ausbildung der Gewindeabschnitte des Verschlusses aus flexiblem Material wird ein sicheres Lösen des Verschlusses auch bei längerem Verbleib in dem rohrförmigen Anschluss sichergestellt, ohne dass die Gefahr besteht, dass Rückstände von dem Verschluss in den Gewindegängen des rohrförmigen Anschlusses verbleiben.

Um das stopfenseitige Ende leichter in den rohrförmigen Anschluss oder dgl. einführen zu können, ist zweckmässigerweise die stopfenförmige Stirnseite des Verschlusskörpers nach aussen konisch vorspringend ausgebildet.

Die Erfindung wird nachfolgend anhand schematischer Zeichnungen an mehreren Ausführungsbeispielen näher erläutert.

Es zeigen:

Fig. 1 eine Seitenansicht einer Ausführungsform eines Verschlusses gemäss der Erfindung vor ihrer Anbringung,
Fig. 2 einen senkrechten Schnitt entlang der Schnittlinie II–II der Fig. 1,
Fig. 3 eine Ansicht auf das geschlossene Ende des Verschlusses nach Fig. 1 und 2,
Fig. 4 eine Seitenansicht eines Schlauchanschlusses mit Gewinde, wobei ein Verschluss gemäss der Erfindung auf dem rechten Ende der Fig. 4 aufgebracht ist,
Fig. 5 in grösserem Masstab einen Schnitt entlang der Schnittlinie V–V der Fig. 4,
Fig. 6 in ähnlicher Darstellung wie Fig. 1 ein abgewandeltes Ausführungsbeispiel des neuen Verschlusses,
Fig. 7 einen Schnitt entlang der Schnittlinie VII–VII der Fig. 6 und
Fig. 8 eine Ansicht auf das geschlossene Ende des Verschlusses nach Fig. 6.

Gemäss den Figuren ist der Verschluss einstückig ausgebildet. Er kann aus geeignetem flexiblem oder elastischem Material bestehen. Zu dieser Gruppe von in Frage kommenden Materialien gehören natürliche und synthetische Gummi, Kunststoffelastomere, dehnbare thermoplastische und thermohärtende Polymere von hohem Molekulargewicht.

Vorzugsweise sollen die flexiblen Materialien gegen Öl widerstandsfähig sein, da der Verschluss im grossen Umfang dazu verwendet wird, Fluid- und Schmiermittelleitungen sowie Leitungen, die zur Fortleitung von hydraulischen Ölen bestimmt sind, zu schützen.

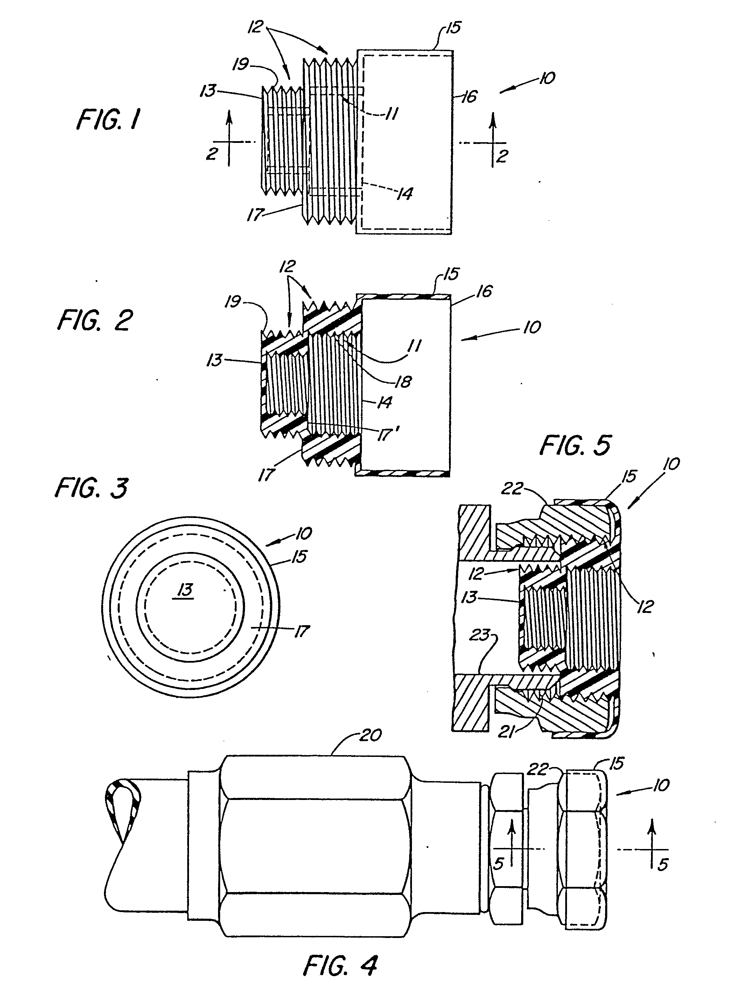

Der Verschlusskörper 10 nach Fig. 1 ist in Form eines hohlen zylindrischen Teils ausgebildet, der wenigstens eine innere und eine äussere zylindrische Eingriffsfläche 11 bzw. 12 aufweist. Im dargestellten Beispiel sind innen und aussen jeweils zwei gegeneinander abgestufte zylindrische Eingriffsabschnitte 11 und 12 vorgesehen, wobei deren Durchmesser vom geschlossenen Ende 13 aus zunimmt.

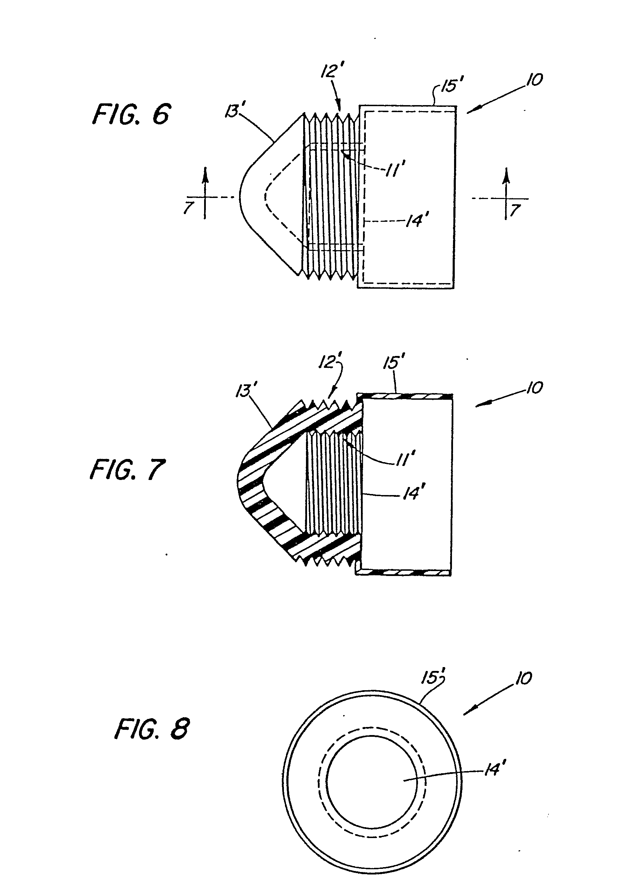

Wie ein Vergleich der Fig. 1 und 6 zeigt, können die geschlossenen Enden 13 bzw. 13' entweder flach oder konisch ausgebildet sein. Das flache Ende wird bevorzugt, wenn der Verschlusskörper 10 verwendet wird, um einen hohlen rohrförmigen Artikel mit Innengewinde oder Aussengewinde zu schützen. Die konische Endform 13' wird bevorzugt, wenn die Schutzkappe bei einem sich erweiternden Ende verwendet wird, z.B. einer Kraftstoffleitung. In Fluchtung mit dem gegenüberliegenden geschlossenen Ende 13 ist ein offenes Ende 14 vorgesehen. Dieses ist von einer flexiblen dünnwandigen Hülse 15 umgeben. Diese Hülse 15 setzt an dem zylindrischen Abschnitt 12 mit grösserem radialem Durchmesser an und ist auf der Stirnseite 16 vollständig offen. Die Hülse weist einen Durchmesser auf, der grösser ist als jeder äussere Eingriffsabschnitt 12 von grösstem Durchmesser. Dieser grössere Durchmesser der Hülse 15 gestattet es, dass diese über den zu schützenden Artikel zurückgefaltet werden kann, um so die Schutzkappe 10 in ihrer Eingriffsstellung noch sicherer zu verriegeln.

Der Verschlusskörper 10 ist so ausgebildet, dass er für verschiedene äussere oder innere Durchmesser von hohlen Ansätzen oder Vorsprüngen mit Gewinde geeignet ist. Er weist daher, wie dargestellt, bevorzugt zwei oder mehr innere und äussere Eingriffsabschnitte 11 und 12 auf. Wie aus Fig. 2 hervorgeht, nimmt der Durchmesser der inneren Eingriffsabschnitte vom geschlossenen Ende 13 zu. Das gleiche gilt für die äusseren Eingriffsabschnitte. Weiterhin sind die Abschnitte von unterschiedlichem Durchmesser miteinander durch flache und senkrecht zur Achse verlaufende Schultern 17 verbunden. Die flachen und senkrecht zur Achse verlaufenden Schultern 17 dienen jeweils als Anschlag, so dass der Verschlusskörper 10 auf einem Artikel verriegelt werden kann. Durch die Kombination der flachen und senkrecht zur Achse verlaufenden Schultern 17 und den inneren oder äusseren Gewindegängen 18 bzw. 19 wird eine sehr gute Verriegelungswirkung erzielt, welche den Verschlusskörper 10 zuverlässig auf dem Artikel sichert. Die inneren und äusseren Gewindegänge 18 und 19 können schraubenförmige, links- oder rechtsgängige Standardgewindegänge oder Rund- oder Kerbgewinde oder dgl. sein. Vorzugsweise umfasst jeder äussere bzw. innere Eingriffsabschnitt 11, 12 drei volle schraubenförmige Gewindegänge. Bevorzugt werden drei bis fünf volle und sich über 360° erstreckende schraubenförmige Gewindegänge vorgesehen.

Durch die Zunahme der Durchmesser der Eingriffsabschnitte vom geschlossenen Ende 13 zum Hülsenabschnitt 15 hin wird gewährleistet, dass der Verschlusskörper in Artikel von unterschiedlicher Grösse zuverlässig eingreifen kann. Fig. 4 zeigt beispielsweise einen Schlauchanschluss 20, an dem ein Verschlusskörper 10 aufgebracht ist, bei dem die flexible Hülse 15 auf die äussere Sechskantfläche 22 des Schlauchanschlusses 20 zurückgefaltet ist. Wie noch besser aus Fig. 5 ersichtlich ist, greift der grössere der beiden äusseren Eingriffsabschnitte 12 in den Durchmesser des mit Innengewinde versehenen Abschnittes 21 des Schlauchanschlusses 20. Der kleinere Abschnitt der äusseren Eingriffsbereiche 12 greift dabei mit Spiel in die offene Bohrung 23 des zugehörigen Teils des Schlauchanschlusses 20. Dies gestattet, dass die Aussengewinde 19 des grösseren äusseren Eingriffsabschnittes 12 in das Innengewinde 21 des Anschlusteils 20 eingeschraubt werden können. Bei dieser Anwendung wird der kleinere äussere Eingriffsabschnitt 12 sowie die beiden inneren Eingriffsabschnitte 11 nicht benötigt. Nachdem jedoch der Verschlusskörper 10 von dem Schlauchanschluss 20 abgenommen werden kann, erlaubt seine breite Einsatzmöglichkeit, ihn auf einen anderen Artikel aufsetzen zu können, der ein Innen- oder Aussengewinde von unterschiedlichem Durchmesser aufweist. Diese breite Anwendungsmöglichkeit ist ein wesentliches Merkmal, das den hier vorliegenden Verschluss deutlich von üblichen Stöpseln und Kappen bekannter Art unterscheidet.

Die flexible und elastisch verformbare dünnwandige Hülse 15 wird benutzt, wenn der Verschlusskörper 10 in die Öffnung eines hohlen Artikels stöpselartig eingeschraubt wird. Durch Zurückfallen der flexiblen Hülse 15 wird ein noch festerer sicherer Eingriff gebildet, so dass der Verschlusskörper 10 noch sicherer an Ort und Stelle verbleibt. Dies gilt selbst dann, wenn der zu schützende Artikel Vibrationen oder Reibkontakten mit anderen Artikeln ausgesetzt ist. Die flexible Hülse 15 wird jedoch nicht zurückgefaltet, wenn der Verschlusskörper 10 von aussen über einen vorspringenden Artikel greift. In diesem Falle bildet die flexible Hülse 15 einen Griffabschnitt, so dass der Arbeiter den stöpselartigen Verschluss 10 leichter auf den Artikel aufschrauben kann. Auch dies ermöglicht es dem Arbeiter, einen besseren Eingriff zwischen Verschlusskörper 10 und Artikel zu erhalten.

Bei dem Ausführungsbeispiel nach den Fig. 6, 7 und 8 weist der Verschlusskörper 10 ebenfalls einen hülsenförmigen Abschnitt 15' und an dessen Einsatzstelle eine Öffnung 14' auf. Das geschlossene Ende 13' ist jedoch konisch ausgebildet, so dass es besser in eine flanschartige Fläche einer Schmiermittelleistung eingreifen und diese abdichten kann. Bei diesem Ausführungsbeispiel ist jeweils nur ein äusserer und innerer Eingriffsabschnitt 11' und 12' vorgesehen. Hierdurch wird eine Verringerung der Herstellungskosten erreicht, was insbesondere dann von Bedeutung ist, wenn ein Abnehmer eine grosse Anzahl von Artikeln mit gleichen inneren oder äusseren Durchmessern mit Verschlüssen versehen möchte.

## Patentansprüche

1. Verschluss zum lösbaren Anbringen wahlweise innen als Gewindestopfen oder aussen als Schraubkappe auf das freie Ende von rohrförmigen Anschlüssen mit Innen- und Aussengewinde, z.B. von Rohrstutzen, bestehend aus einem von der einen Stirnseite (14) her kappenförmig und mit Innengewindeabschnitt (11) ausgebildeten und von der anderen Stirnseite (13) her stopfenförmig und mit Aussengewindeabschnitt (12) ausgebildeten Verschlusskörper (10), dadurch gekennzeichnet, dass der Verschlusskörper (10) aus einem flexiblen Material besteht, dass der Aussengewindeabschnitt (12) auf der Aussenseite des mit Innengewinde versehenen hohlzylindrischen Abschnittes des Verschlusskörpers (10) vorgesehen ist und dass ein Griffabschnitt in Form einer sich axial von der kappenförmigen Stirnseite (14) weg erstreckenden und in Richtung auf die stopfenförmige Stirnseite (13) über den Verschlusskörper bzw. ein vorspringendes Teil (22) des zu verschliessenden Anschlusses (20) zurückrollbaren Hülse (15) von gegenüber der Verschlusskappe (10) verringerter Wanddikke vorgesehen ist, die über einen sich radial nach aussen erstreckenden Kragen mit der kappenförmigen Stirnseite (14) des Verschlusskörpers (10) verbunden ist.

2. Verschluss nach Anspruch 1, dadurch gekennzeichnet, dass der Innen- und Aussendurchmesser des Verschlusskörpers (10) von dem stopfenförmigen Ende (13) her stufenweise zunimmt und der Verschlusskörper (10) wenigstens zwei gegeneinander abgestufte Abschnitte (11, 12) jeweils mit Innen- und Aussengewinde aufweist.

3. Verschluss nach Anspruch 1 oder 2, dadurch gekennzeichnet, dass das stopfenförmige Ende (13) des Verschlusskörpers (10) in axialer Richtung nach aussen konisch vorspringend ausgebildet ist.

## Claims

1. A closure for releasable fitting selectively internally as a screwthreaded plug or externally as a screw cap, on to the free end of tubular connections with an internal or an external screwthread, for example pipe connections, comprising a closure body portion (10) which from one end (14) is of a cap-like configuration and is formed with an internal screwthread portion (11) and which from the other end (13) is of a plug-like configuration and is formed with an external screwthread portion (12), characterised in that the closure body portion (10) comprises a flexible material, that the external screwthread portion (12) is provided on the outside of the hollow-cylindrical part, which is provided with the internal screwthread, of the closure body portion (10), and that there is provided a gripping portion in the form of a sleeve (15) which extends axially away from the cap-like end (14) and which can be rolled back in the direction of the plug-like end (13) over the closure body portion or a projecting part (22) of the connection (20) to be closed, said sleeve (15) being of smaller wall thickness than the closure cap (10) and being joined to the cap-like end (14) of the closure body portion (10) by way of a radially outwardly extending collar portion.

2. A closure according to claim 1 characterised in that the internal and external diameters of the closure body portion (10) increase stepwise from the plug-like end (13) and the closure body portion (10) has at least two parts (11, 12) which are stepped relative to each other, each with an internal and an external screwthread.

3. A closure according to claim 1 or claim 2 characterised in that the plug-like end (13') of the closure body portion (10) is of such a configuration as to project conically outwardly in the axial direction.

## Revendications

1. Organe obturateur pouvant être adapté amoviblement à volonté à l'intérieur de l'extrémité libre de raccords tubulaires, en formant un bouchon fileté, ou à l'extérieur de cette extrémité libre, en formant un capuchon fileté, dans le cas de raccords munis d'un filetage intérieur ou extérieur, par exemple de tubulures, constitué par un élément obturateur (10) s'étendant à partir d'une face terminale (14) sous forme de capuchon et à partir d'une autre face terminale (13) sous forme de bouchon et muni d'un tronçon fileté extérieur (12), caractérisé en ce que l'élément obturateur (10) est en une matière flexible, en ce que le tronçon fileté extérieur (12) est prévu sur le côté extérieur du tronçon cylindrique creux muni d'un filetage intérieur de l'élément obturateur (10), et en ce qu'il est prévu un tronçon de préhension en forme de douille (15) s'étendant axialement depuis la face terminale en forme de capuchon (14) et pouvant être rabattue par roulement, en direction de la face terminale en forme de bouchon (13), sur l'élément obturateur ou sur une partie en saillie (22) du raccord à obturer (20), cette douille ayant une épaisseur de paroi réduite par rapport à l'élément obturateur (10), ladite douille étant reliée par un collet orienté radialement vers l'extérieur à la face terminale en forme de capuchon (14) de l'élément obturateur (10).

2. Organe obturateur suivant la revendication 1, caractérisé en ce que les diamètres intérieur et extérieur de l'élément obturateur (10) augmentent par gradins depuis l'extrémité en forme de bouchon (13) et en ce que l'élément obturateur (10) comporte au moins deux tronçons (11, 12) en gradins l'un par rapport à l'autre, comportant chaque fois un filetage intérieur et un filetage extérieur.

3. Organe obturateur suivant la revendication 1 ou 2, caractérisé en ce que l'extrémité en forme de bouchon (13') de l'élément obturateur (10) a une forme faisant saillie selon un profil conique vers l'extérieur dans le sens axial.

FIG. 1

FIG. 2

FIG. 3

FIG. 5

FIG. 4

FIG. 6

FIG. 7

FIG. 8